# EUROPÄISCHE PATENTSCHRIFT

(11) **EP 1 263 069 B1**
(45) Veröffentlichungstag und Bekanntmachung des Hinweises auf die Patenterteilung: **07.05.2014**
(21) Anmeldenummer: 02008622.9
(22) Anmeldetag: 17.04.2002
(51) Int. Cl.: H01M 8/04

(54) **Brennstoffzellensystem und Verfahren zur Erzeugung von elektrischer Energie mittels eines Brennstoffzellensystems**
Fuel cell system and method for generating electrical energy by means of a fuel cell system
Système de piles à combustible et méthode pour la génération d'énergie électrique à l'aide d'un système de piles à combustible

(30) Priorität: 31.05.2001 DE 10127600
(43) Veröffentlichungstag der Anmeldung: 04.12.2002
(73) Patentinhaber: Deutsches Zentrum für Luft- und Raumfahrt e.V., 51147 Köln (DE)
(72) Erfinder: Brinner, Andreas, 71277 Rutesheim (DE)
(74) Vertreter: Hoeger, Stellrecht & Partner Patentanwälte

(56) Entgegenhaltungen:
- EP-A- 0 633 158
- EP-A- 1 271 680
- US-A- 5 645 950
- PATENT ABSTRACTS OF JAPAN Bd. 010, Nr. 221 (E-424), 2. August 1986 (1986-08-02) & JP 61 058173 A (SHIN KOBE ELECTRIC MACH CO LTD), 25. März 1986 (1986-03-25)

## Beschreibung

Die Erfindung betrifft ein Verfahren zur Erzeugung von elektrischer Energie mittels eines Brennstoffzellensystems, bei welchem einem oder mehreren Brennstoffzellenblöcken ein Brennstoff und ein Oxidator zugeführt werden und in einem Brennstoffzellenblock eine Umwandlung von chemischer Energie in elektrische Energie erfolgt, wobei als Brennstoff Wasserstoff und als Oxidator Luftsauerstoff eingesetzt wird.

Ferner betrifft die Erfindung ein Brennstoffzellensystem, bei welchem einem oder mehreren Brennstoffzellenblöcken ein Brennstoff und ein Oxidator zugeführt werden und in einem Brennstoffzellenblock eine Umwandlung von chemischer Energie in elektrische Energie erfolgt, wobei als Brennstoff Wasserstoff und als Oxidator Luftsauerstoff eingesetzt wird.

Für den Einsatz eines Brennstoffzellensystems als Energieversorger auf verschiedenen Anwendungsgebieten ist es wünschenswert, dass die elektrische Leistung skalierbar ist, beispielsweise im Bereich zwischen 0,01 bis ca. 1 kW, so dass dasselbe Konzept für ein Brennstoffzellensystem für verschiedene Leistungsanforderungen verwendbar ist. Ferner ist es wünschenswert, dass ein solches Brennstoffzellensystem weitgehend autonom arbeitet.

Solche Brennstoffzellensysteme lassen sich dann beispielsweise bei Bodenreinigungsgeräten mit eigenem Antrieb, Rollstühlen mit elektrischem Antrieb, für tragbare Stromversorger oder als Starterbatterieersatz für Kraftfahrzeuge und Flugzeuge einsetzen.

Aus der US 4,645,950 ist ein Verfahren zum Betreiben einer Vorrichtung bekannt, welche die Ausgabe eines Luft verbrauchenden Brennstoffzellensystems kontrolliert. Es wird dabei basierend auf der Messung eines Brennstoffzellenstroms ein gewünschter Wert für den Luftvolumenstrom bestimmt und ein tatsächlicher Wert des Luftvolumenstroms auf den gewünschten Wert eingestellt. Der Druck in einem Kathodenraum der Brennstoffzelle wird auf einen vorbestimmten Arbeitsdruck eingestellt.

Aus der EP 0 633 158 A1 ist ein Fahrzeug mit elektrischer Antriebseinheit und mit einer Brennstoffzelle bekannt, wobei in deren Zuführleitung ein mit Hilfe eines Elektromotors angetriebener Kompressor zur Verdichtung des Oxidant-Massenstroms angeordnet ist und die Antriebseinheit und der Elektromotor für den Kompressor von der Brennstoffzelle mit elektrischer Energie versorgt werden. Zum Antrieb des Kompressormotors ist zusätzlich ein Anlassermotor vorgesehen, der von einer Starterbatterie mit Spannung versorgt wird.

Der Erfindung liegt die Aufgabe zugrunde, ein Verfahren zur Erzeugung von elektrischer Energie mittels eines Brennstoffzellensystems bereitzustellen, durch das das Brennstoffzellensystem einfach aufbaubar ist bzw. ein Brennstoffzellensystem zu schaffen, welches einfach aufgebaut ist.

Diese Aufgabe wird bei dem eingangs genannten Verfahren erfindungsgemäß dadurch gelöst, dass Zuführungsparameter von Brennstoff und Oxidator fest vorgegeben werden, wobei auf der Zuführungsseite der Druck des einem Brennstoffzellenblock zugeführten Wasserstoffs vorgegeben wird und der Druck und der Volumenstrom der einem Brennstoffzellenblock zugeführten Luft fest vorgegeben wird, dass eine kontinuierliche Wasserstoffabführung aus einem Brennstoffzellenblock gesperrt wird, dass eine Wasserstoffabführung über ein getaktetes Ventil erfolgt und ein asymmetrischer Taktgeber zur Taktung des Ventils vorgesehen ist und dass eine Mengenregelung des einem Brennstoffzellenblock zugeführten Wasserstoffs durch die Leistungsaufnahme des Verbrauchers erfolgt.

Durch die geeignete Einstellung der Zuführungsparameter lässt sich eine dynamische Leistungssteuerung erreichen, wobei die Leistungsabgabe verbrauchergeführt ist. Dadurch lässt sich ein einfacher Systemaufbau mit preiswerten Komponenten realisieren, ohne dass aufwendige und Energie konsumierende Regeleinrichtungen vorgesehen werden müssen. Weiterhin kann bei geeigneter Einstellung der Zuführungsparameter von Brennstoff und Oxidator im Zusammenhang mit Polymermembran-Brennstoffzellen auf die Vorschaltung von Befeuchtereinrichtungen verzichtet werden. Dadurch ergibt sich zum einen ein niedriger Energieverbrauch bei dem Betrieb des erfindungsgemäßen Brennstoffzellensystems, und zum anderen lässt sich eine hohe Systemzuverlässigkeit realisieren. Es lässt sich mit dem erfindungsgemäßen Verfahren zeitgleich auf die dynamischen und statischen Energieanforderungen des Verbrauchers mit Energieabgabe reagieren, wobei das Brennstoffzellensystem seinen Eigenenergieverbrauch abdeckt.

Als Brennstoff wird Wasserstoff und als Oxidator Luftsauerstoff eingesetzt, wobei der Brennstoffzellenblock dann Polymermembran-Brennstoffzellen (PEFC) umfasst. Bei solchen Brennstoffzellen besteht der Elektrolyt aus einer protonenleitenden Folie. Diese Membran übernimmt gleichzeitig neben der Funktion des Elektrolyten auch eine Katalysatorträgerfunktion für die anodischen und kathodischen Elektrokatalysatoren und die Funktion eines Separators für die gasförmigen Reaktanten Wasserstoff und Sauerstoff.

Auf der Zuführungsseite wird der Druck des einem Brennstoffzellenblock zugeführten Wasserstoffs vorgegeben. Dieser Druck lässt sich dann auf den Druck der zugeführten Luft ausrichten, um so eine optimale Verfahrensführung zu erreichen.

Eine kontinuierliche Wasserstoffabführung wird aus einem Brennstoffzellenblock gesperrt. Dadurch lässt sich der Wasserstoffdurchfluss von einem Wasserstoffvorrat zu einem Brennstoffzellenblock direkt über den elektrischen Abgabestrom des Brennstoffzellensystems an einen Verbraucher und an Eigenverbraucher einstellen, d. h. die Leistungsaufnahme dieser externen und internen Verbraucher steuert den Wasserstoffvolumenstrom. Es muss keine Regelungseinrichtung vorgesehen werden, um die Wasserstoffmenge, welche dem Brennstoffzellenblock zugeführt wird, zu steuern.

Eine Mengenregelung des einem Brennstoffzellenblock zugeführten Wasserstoffs erfolgt durch die Leistungsaufnahme des Verbrauchers, so dass keine gesonderte Regelungsvorrichtung vorgesehen werden muss, die zum einen einen Energieverbraucher darstellt und zum anderen sich schlecht an dynamische Leistungsschwankungen des elektrischen Verbrauchers aufgrund einer endlichen Einstellzeit anpassen lässt. Durch die gewissermaßen automatische Mengenregelung über die Leistungsaufnahme des Verbrauchers bei dem erfindungsgemäßen Verfahren erfolgt eine dynamische Anpassung an den Verbraucher.

Auf der Zuführungsseite wird der Druck und der Volumenstrom der einem Brennstoffzellenblock insbesondere in gegenseitiger Abhängigkeit zugeführten Luft fest vorgegeben. Es muss dann keine Luftmengenregelung durchgeführt werden, so dass das Brennstoffzellensystem einfach aufbaubar ist. Da weiterhin keine entsprechenden Regelventile vorgesehen werden müssen, ist der Eigenenergieverbrauch des Brennstoffzellensystems verringert.

Ganz besonders vorteilhaft ist es, wenn eine feste Druckdifferenz zwischen Wasserstoffzuführung und Luftzuführung eingestellt wird. Insbesondere liegt diese Druckdifferenz im Bereich zwischen 0,1 und 0,3 bar mit dem höheren Druck bei der Luftzuführung. Es lässt sich dadurch zum einen erreichen, dass die Membrane der Brennstoffzellen nicht austrocknen, da der Druckunterschied eine bestimmte Schwelle überschreitet und zum anderen, daß nicht Wasserdampf aus der Membran herausgedrückt wird, da der Druckunterschied eine bestimmte Schwelle unterschreitet.

Günstigerweise wird dabei Luft einem Brennstoffzellenblock im Überschuß bereitgestellt, beispielsweise die doppelte Menge der Luft, welche maximal benötigt wird, um für eine optimale Umsetzung in den Brennstoffzellen zu sorgen. Es läßt sich dadurch erreichen, daß die Wasserstoffmenge, welche in einem Brennstoffzellenblock umgesetzt wird, durch die Leistungsaufnahme des Verbrauchers gesteuert wird, so daß keine Regelungsvorrichtung für die Luftzuführung und die Wasserstoffzuführung vorgesehen werden muß.

Es hat sich als günstig erwiesen, wenn der Druck der Luftzuführung im Bereich zwischen 1,2 bar und 1,5 bar eingestellt wird. Dadurch läßt sich auch der Eigenverbrauch des Brennstoffzellensystems niedrig halten, da der Überdruck gering gehalten ist.

Bei einer konstruktiv günstigen Variante einer Ausführungsform wird der Wasserstoff einem Brennstoffzellenblock von einem Vorrat über einen Druckminderer zugeführt. Der Druckminderer stellt dann einen vorgegebenen Wert für den Druck des zum Brennstoffzellenblock zugeführten Wasserstoffs her, d. h. dieser Zuführungsdruck läßt sich definiert einstellen. Es ist also günstig, wenn der Ausgangsdruck des Druckminderers fest eingestellt wird, um so eine definierte Zuführung zu erreichen. Die Einstellung des Drucks bei der Wasserstoffzuführung und des Drucks bei der Luftzuführung und des Volumenstroms der Luftzuführung erfolgt für ein vorgegebenes System im wesentlichen im Rahmen der Erstinbetriebnahme. Im eigentlichen Betrieb, bei dem das Brennstoffzellensystem Energie abgibt, sind diese Arbeitspunkte jedoch fest eingestellt und werden nicht verändert. Vorteilhaft ist es, wenn die Vorgaben zur Einstellung eines Arbeitspunkts einstellbar sind, um so ein Brennstoffzellensystem optimieren zu können, wobei, wie erwähnt, diese Einstellbarkeit der Einstellung nicht während des Betriebs durchgeführt wird, sondern zur Gesamteinstellung des Systems vor oder während der Erstinbetriebnahme und dann nicht mehr verändert wird.

Es erfolgt eine Wasserstoffabführung über ein getaktetes Ventil. Im wesentlichen lässt sich dann die Wasserstoffabführung sperren, damit sich die dem Brennstoffzellenblock zugeführte Wasserstoffmenge über die Leistungsaufnahme eines Verbrauchers steuern lässt, während ein Wasserstoffüberschuss sich abführen lässt. Die Praxis hat dabei gezeigt, dass die Überschussmenge von Wasserstoff bei dem erfindungsgemäßen Verfahren unterhalb von 2 % der verbrauchten Wasserstoffmenge liegt. Es genügt dann, etwa alle 30 bis 60 Sekunden in kurzen Zeitintervallen von beispielsweise ca. 0,5 Sekunden das getaktete Sperrventil zu öffnen, um die Überschussmenge abzuführen. Es ist ein asymmetrischer Taktgeber zur Taktung des Ventils vorgesehen.

Die geringe Überschussmenge an Wasserstoff muss, weil sie eben gering ist, nicht zurückgeführt werden, d. h. es muss kein Wasserstoffkreislauf gebildet werden. Der Überschusswasserstoff, d. h. der abgeführte Wasserstoff, wird dann einem Katalysator und insbesondere einem Rekombinationskatalysator zur Bildung von Wasser zugeführt, bei dem eine Rekombination mit Luftsauerstoff stattfindet. Auf der Wasserstoffseite gibt dann das erfindungsgemäße Brennstoffsystem in Zeitintervallen nur Wasser als "Emission" ab.

Ein Brennstoffzellensystem lässt sich auf einfache Weise ausbilden, wenn ein Brennstoffzellenblock mittels Luft gekühlt wird. Beispielsweise ist dazu ein Brennstoffzellenblock mit Kühlrippen versehen und ein Ventilator kühlt dann einen Brennstoffzellenblock.

Es hat sich als günstig erwiesen, wenn ein Miniaturverbraucher an den oder die Brennstoffzellenblöcke gekoppelt ist, um bei Stillstand eine Umpolung der Brennstoffzellen zu verhindern, um so insbesondere deren Zerstörung zu verhindern.

Ferner wird die eingangs genannte Aufgabe bei einem gattungsgemäßen Brennstoffzellensystem erfindungsgemäß dadurch gelöst, dass Zuführungsparameter von Brennstoff und Oxidator fest vorgegeben werden, wobei auf der Zuführungsseite der Druck des einem Brennstoffzellenblock zugeführten Wasserstoffs vorgegeben wird und der Druck und der Volumenstrom der einem Brennstoffzellenblock zugeführten Luft fest vorgegeben wird, dass eine kontinuierliche Wasserstoffabführung aus einem Brennstoffzellenblock gesperrt wird, dass eine Wasserstoffabführung über ein getaktetes Ventil erfolgt und ein asymmetrischer Taktgeber zur Taktung des Ventils vorgesehen ist und dass eine Mengenregelung des einem Brennstoffzellenblock zugeführten Wasserstoffs durch die Leistungsaufnahme des Verbrauchers erfolgt.

Diese Einstellvorrichtung sorgt dafür, dass definierte Werte der Zuführung von Brennstoff und Oxidator zu einem Brennstoffzellenblock vorliegen und dabei insbesondere der Druck und der Volumenstrom von zugeführter Luft und der Druck von zugeführtem Wasserstoff fest eingestellt ist.

Das erfindungsgemäße Brennstoffzellensystem weist die gleichen Vorteile auf, wie sie bereits im Zusammenhang mit dem erfindungsgemäßen Verfahren erläutert wurden.

Weitere vorteilhafte Ausgestaltungen eines solchen Brennstoffzellensystems und ihre Vorteile wurden bereits im Zusammenhang mit dem erfindungsgemäßen Verfahren erläutert.

Vorteilhaft ist es, wenn eine Kühlungsvorrichtung für den oder die Brennstoffzellenblöcke vorgesehen ist, welche einen Lüfter umfasst. Die Kühlungsvorrichtung lässt sich auf einfache Weise ausbilden, wenn ein Temperatursensor an einem Brennstoffzellenblock angeordnet ist und eine vom Temperatursensor ermittelte Temperatur eine Steuergröße für den Lüfter ist. Dadurch läßt sich die Kühlungsvorrichtung von der Steuerung des Brennstoffzellensystems im wesentlichen entkoppeln, da der Temperatursensor die entscheidende Größe für die Temperaturregelung an dem Brennstoffzellenblock bereitstellt. Beispielsweise läßt sich die Kühlung so ausbilden, daß bei Überschreiten einer bestimmten Schwellentemperatur der Lüfter eingeschaltet wird, während unterhalb dieser Schwellentemperatur der Lüfter aus ist. Über den Temperatursensor, der auch als Notschalter ausgebildet sein kann, läßt sich das gesamte Brennstoffzellensystem abschalten, wenn eine bestimmte, vorher eingestellte Maximaltemperatur überschritten wird. Eine solche Übertemperatur kann beispielsweise bei Ausfall der Kühlungsvorrichtung auftreten. Beispielsweise kann dazu auch ein Bimetall-Temperaturschalter vorgesehen sein, welcher in Serie zu einem Hauptschalter angeordnet ist.

Bei einer vorteilhaften Variante einer Ausführungsform ist eine Hilfsenergiequelle vorgesehen, welche die Hilfsenergie zur Inbetriebnahme des Brennstoffzellensystems bereitstellt und es ist ein Schalter vorgesehen, mittels welchem das Brennstoffzellensystem von Energieaufnahme aus der Hilfsenergiequelle in einen Energieabgabebetrieb eines Brennstoffzellenblocks umschaltbar ist. Ein Brennstoffzellensystem umfaßt selber Energieverbraucher, wie beispielsweise einen Luftverdichter zur Luftzuführung zu einem Brennstoffzellenblock und eine Kühlungsvorrichtung. Wird das Brennstoffzellensystem gestartet, d. h. die Inbetriebnahme eingeleitet, dann müssen diese Energieverbraucher entsprechend mit Energie versorgt werden. Um ein Brennstoffzellensystem als autonomen elektrischen Energieerzeuger verwenden zu können, ist die Hilfsenergiequelle vorgesehen, die eben die "Startenergie" bereitstellt. Weiterhin ist es günstig, wenn ein Schalter zur Umschaltung auf den eigentlichen Energieabgabebetrieb (Leistungsbetrieb) vorgesehen ist, um dann in den eigentlichen Betriebsmodus des Brennstoffzellensystems umschalten zu können und insbesondere automatisch umschalten zu können. Der Energieabgabebetrieb ist dabei ein Energieabgabebetrieb bezüglich eines externen Verbrauchers und auch bezüglich internen Verbrauchern, denen dann die elektrische Energie von dem oder den Brennstoffzellenblöcken selber bereitgestellt wird.

Zur Ausbildung einer autonomen Energieversorgungseinheit ist es also günstig, wenn Energieverbraucher des Brennstoffzellensystems von diesem selber mit Energie versorgbar sind. Insbesondere ist dabei ein Luftverdichter des Brennstoffzellensystems von diesem mit Energie versorgbar und ist eine Kühlungsvorrichtung eines Brennstoffzellenblocks von dem Brennstoffzellensystem mit Energie versorgbar.

Bei einer vorteilhaften Variante einer Ausführungsform umfaßt die Hilfsenergiequelle einen oder mehrere Akkumulatoren. Über eine Akkumulatorladevorrichtung lassen sich diese Akkumulatoren während des Energieabgabebetriebs aufladen. Sie stellen also die Hilfsenergie, d. h. Startenergie, zum Hochfahren des Brennstoffsystems bereit. Mit den Akkumulatoren läßt es sich auch erreichen, daß, wenn ein Verbraucher angeschlossen ist, dieser für eine begrenzte Zeitspanne elektrische Energie von dem Brennstoffzellensystem abgreifen kann, auch wenn noch nicht in den Energieabgabebetrieb des oder der Brennstoffzellenblöcke umgeschaltet ist. Der Verbraucher kann dann die Energie dem Akkumulator entnehmen. Dieser Akkumulatorbetrieb erfolgt kurzzeitig und zeitgesteuert so lange, bis das Brennstoffzellensystem einen stabilen reproduzierbaren Leerlaufbetriebszustand erreicht hat.

Günstig ist es, wenn die Hilfsenergiequelle extern mit Energie versorgbar ist. Beispielsweise sind dazu entsprechende Anschlußbuchsen vorgesehen, an die eine externe Stromquelle anschließbar ist. Dadurch läßt sich dem Brennstoffzellensystem gewissermaßen eine Art von Starthilfe geben, wenn beispielsweise der Akkumulator entladen ist.

Ganz besonders vorteilhaft ist es, wenn eine Inbetriebnahme/Außerbetriebnahme des Brennstoffzellensystems automatisch durchführbar ist, d. h. der Inbetriebnahmevorgang/Außerbetriebnahmevorgang ohne Überwachung und Eingriff eines Benutzers erfolgt. Da bei dem erfindungsgemäßen Brennstoffzellensystem die Parameter der Luftzuführung und Wasserstoffzuführung fest eingestellt sind und daher auf dieser Seite keine Regelung vorgenommen werden muß, läßt sich eine solche automatische Inbetriebnahme/Außerbetriebnahme erfindungsgemäß auf einfache Weise erreichen.

Insbesondere ist es vorteilhaft, wenn ein extern betätigbarer Schalter zur Einleitung der Inbetriebnahme/Außerbetriebnahme des Brennstoffzellensystems vorgesehen ist. Ein Bediener betätigt den Schalter, um den Inbetriebnahmevorgang einzuleiten bzw. um den Außerbetriebnahmevorgang einzuleiten.

Um den Start des Brennstoffzellensystems und den Übergang auf den Energieabgabebetrieb automatisch durchführen zu können, sind vorteilhafterweise die Inbetriebnahmeparameter/Außerbetriebnahmeparameter des Brennstoffzellensystems fest eingestellt, so daß ohne Zutun eines Bedieners ein Hochfahren/Herunterfahren des Brennstoffzellensystems auf die eingestellten Parameter erfolgt.

Ganz besonders vorteilhaft ist es, wenn das Brennstoffzellensystem in einem kompakten Behälter und insbesondere geschlossenen Behälter angeordnet ist, welcher mit elektrischen Anschlüssen für einen externen Verbraucher versehen ist. Dieser Behälter läßt sich transportabel ausbilden, und das Brennstoffzellensystem läßt sich dann beispielsweise als transportable Energieversorgungseinheit verwenden, an die ein Verbraucher angeschlossen werden kann.

Insbesondere ist es dazu vorteilhaft, wenn ein Brennstoffvorrat in dem Behälter angeordnet ist, d. h. in dem Brennstoffvorrat Wasserstofftanks angeordnet sind, so daß ein kompakter Aufbau erreicht ist und keine weiteren Komponenten von außen zugeschaltet werden müssen. Bei dem erfindungsgemäßen Brennstoffzellensystem werden auch interne Energieverbraucher von dem System selber mit elektrischer Energie versorgt, so daß ein kompakter Aufbau erreicht ist.

Die nachfolgende Beschreibung bevorzugter Ausführungsformen dient im Zusammenhang mit der Zeichnung der näheren Erläuterung der Erfindung. Es zeigen:
- Figur 1: ein schematisches Blockschaltbild einer Ausführungsform eines erfindungsgemäßen Brennstoffzellensystems;
- Figur 2: die Komponenten eines erfindungsgemäßen Brennstoffzellen-systems gemäß dem Blockschaltbild von Figur 1;
- Figur 3: eine vergrößerte Darstellung eines Teilausschnitts des Brennstoffzellensystems gemäß Figur 2, wobei eine Steuerungsvorrichtung in größerem Detail dargestellt ist;
- Figur 4: eine Variante einer Steuerungsvorrichtung zur Steuerung der Inbetriebnahme, des Betriebs und der Außerbetriebnahme des Brennstoffzellensystems gemäß Figur 2 und
- Figur 5: eine schematische Ansicht eines kompakten Behälters, in dem das erfindungsgemäße Brennstoffzellensystem angeordnet ist.

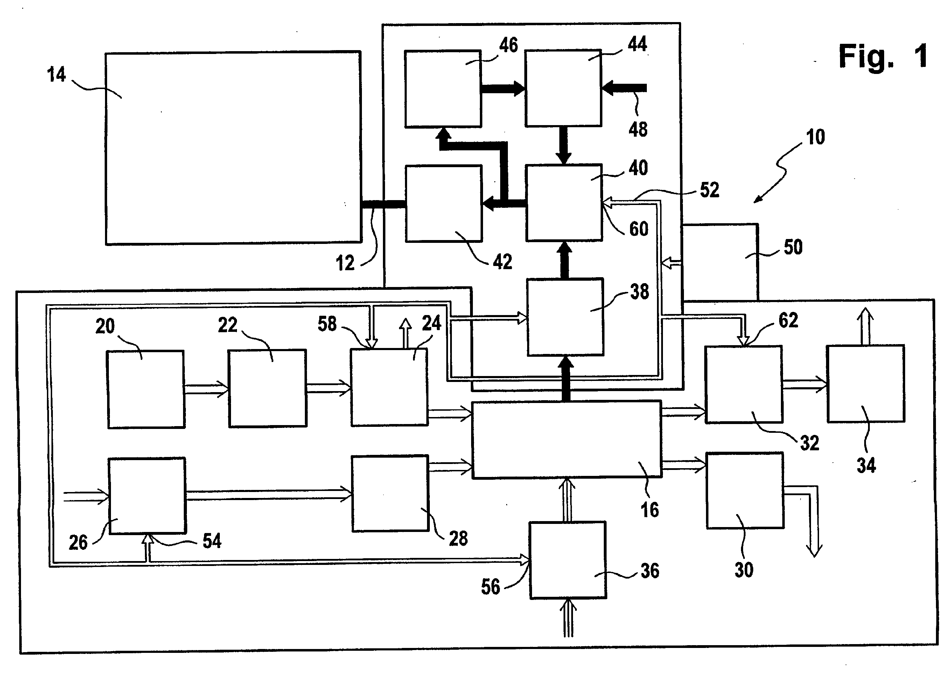

Durch ein Brennstoffzellensystem, welches in Figur 1 als Ganzes mit 10 bezeichnet ist, ist an Anschlüssen 12 einem Verbraucher 14 elektrische Energie bereitstellbar.

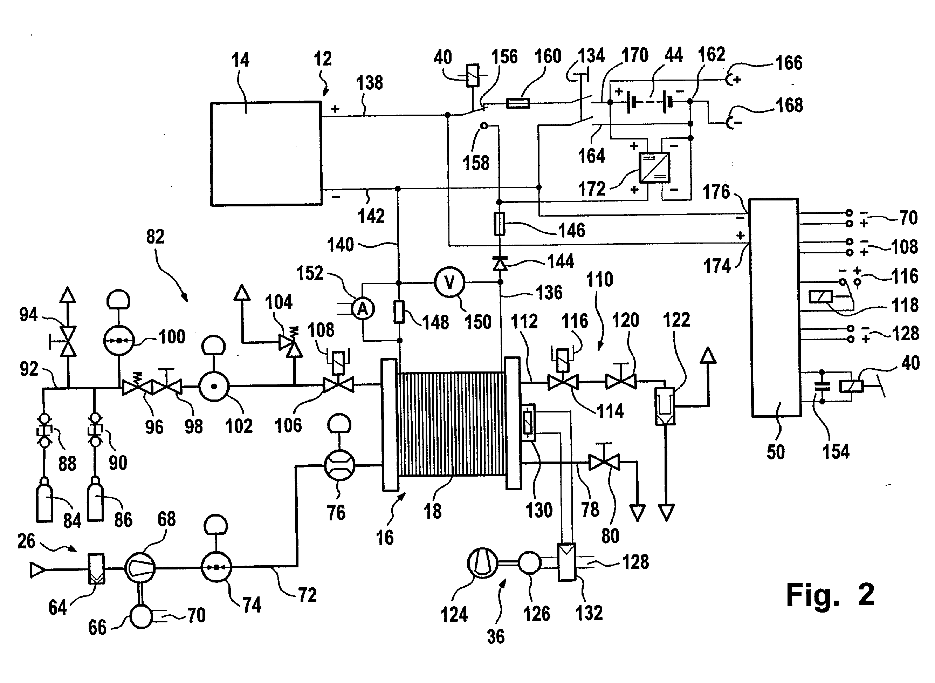

Das Brennstoffzellensystem 10 umfaßt einen Brennstoffzellenblock 16 mit Brennstoffzellen 18 (Figur 2), die stapelartig zu dem Brennstoffzellenblock 16 (Brennstoffzellenstack) verbunden sind. In dem Brennstoffzellenblock 16 wird chemische Energie durch die kalte Verbrennung eines Brennstoffs mit einem Oxidator in elektrische Energie umgewandelt und an dem Anschluß 12 dem Verbraucher 14 bereitgestellt.

Bei den Brennstoffzellen 18 handelt es sich insbesondere um Polymermembran-Brennstoffzellen (PEFC), bei denen der Elektrolyt durch eine protonenleitende Folie gebildet ist, die neben der Funktion des Elektrolyten auch Katalysatorträger für die anodischen und kathodischen Elektrokatalysatoren ist und Separator für die gasförmigen Reaktanten. Als Brennstoff wird dabei Wasserstoff eingesetzt und als Oxidator Sauerstoff und insbesondere Luftsauerstoff.

Dazu ist ein Wasserstoffspeicher 20 für einen Wasserstoffvorrat vorgesehen, wobei der Wasserstoff über einen Druckminderer 22 und über eine Ventilvorrichtung 24 dem Brennstoffzellenblock 16 zuführbar ist.

Der Luftsauerstoff als Oxidator wird über eine Luftversorgungsvorrichtung 26 dem Brennstoffzellenblock 16 zugeführt. Eine Volumenstrommeßvorrichtung 28 ermittelt die zugeführte Luftmenge.

Über eine Ventilvorrichtung 30 auf der Abführungsseite des Brennstoffzellenblocks 16 läßt sich der Druck der zugeführten Luft einstellen. Die Doppelpfeile in Figur 1 zeigen dabei die Strömungsrichtung der Luft an.

Auf der Wasserstoffabführungsseite ist ein Sperrventil 32 angeordnet, welches getaktet steuerbar ist, so daß die Sperrwirkung getaktet aufhebbar ist.

Dem Sperrventil 32 nachgeschaltet ist ein Rekombinationskatalysator 34, an welchem durch das Sperrventil 32 durchgelassener Wasserstoff mit Luftsauerstoff zu Wasser oxidiert. Die Doppelpfeile ausgehend von dem Wasserstoffspeicher 20 deuten dabei die Strömungsrichtung des Wasserstoffs an.

Der Brennstoffzellenblock 16 wird mittels einer Kühlungsvorrichtung 36 gekühlt, wobei insbesondere der Brennstoffzellenblock 16 luftgekühlt ist. Die Dreifachpfeile in Figur 1 deuten dabei die Strömungsrichtung der zur Kühlung zugeführten Luft an.

Mit dem Brennstoffzellenblock 16 ist eine Meßvorrichtung 38 verbunden, welche eine Spannungsmessung und Strommessung durchführt. Dieser Meßvorrichtung 38 nachgeschaltet ist ein Leistungsschalter 40, mit dem sich auf eine Energieabgabe des Brennstoffzellenblocks 16 an den Verbraucher 14 schalten läßt. Dem Leistungsschalter 40 ist ein Energieverteiler 42 nachgeordnet. Über diesen Energieverteiler läßt sich auch die Luftversorgungsvorrichtung 26 und die Kühlungsvorrichtung 36 als interne Energieverbraucher des Brennstoffzellensystems 10 versorgen.

Der Leistungsschalter 40 ist einem Akkumulator 44 als Hilfsenergiequelle nachgeschaltet, welcher steuert, ob der Energieverteiler 42 mit der elektrischen Energie von dem Brennstoffzellenblock 16 oder dem Akkumulator 44 versorgt wird. Für den Akkumulator 44 ist dabei eine Akkumulatorladevorrichtung 46 vorgesehen, welche wiederum bei einem Energieabgabebetrieb des Brennstoffzellenblocks 16 (der Leistungsschalter 40 ist so gestellt, daß der Verbraucher 14 von dem Brennstoffzellenblock 16 mit elektrischer Energie versorgt ist) aufladbar ist. Es kann auch vorgesehen sein, daß der Akkumulator 44 von außen aufladbar ist. Dies ist durch den Pfeil mit Bezugszeichen 48 angedeutet.

Durch eine Steuerungsvorrichtung 50 ist der Betrieb und insbesondere die Inbetriebnahme und Außerbetriebnahme des Brennstoffzellensystems 10 steuerbar. Dies ist in der Figur 1 mittels einer Steuerleitung 52 angedeutet. Über die Steuervorrichtung 50 läßt sich insbesondere die Inbetriebnahme und Außerbetriebnahme der Luftversorgungsvorrichtung 26 steuern; dies ist angedeutet mit dem Bezugszeichen 54. Weiterhin läßt sich die Inbetriebnahme der Kühlungsvorrichtung 36 steuern; dies ist mit dem Bezugszeichen 56 angedeutet.

Durch die Steuerungsvorrichtung 50 läßt sich weiterhin ein Sperrventil 58 der Ventilvorrichtung 24 öffnen bzw. schließen, um so die Wasserstoffzufuhr zum Brennstoffzellenblock 16 zu öffnen bzw. zu sperren; dies ist mit dem Bezugszeichen 58 angedeutet.

Weiterhin läßt sich mit der Steuerungsvorrichtung 50 der Leistungsschalter 40 steuern, d. h. insbesondere ob in den Energieabgabebetrieb an den Verbraucher 14 geschaltet wird oder die Energieverbraucher des Brennstoffzellensystems 10 (beispielsweise Luftversorgungsvorrichtung 26, Kühlungsvorrichtung 36, Steuerungsvorrichtung 50, Ventilvorrichtung 24) mit der Hilfsenergie des Akkumulators 44 versorgt werden müssen; diese Steuerung ist durch das Bezugszeichen 60 angedeutet.

Weiterhin bewirkt die Steuerungsvorrichtung 50 das getaktete Öffnen des Sperrventils 32; dies ist durch das Bezugszeichen 62 angedeutet.

Im folgenden wird der Aufbau des Brennstoffzellensystems 10 anhand eines Ausführungsbeispiels näher erläutert sowie seine Funktionsweise näher erläutert.

Die Luftversorgungsvorrichtung 26 umfaßt, wie in Figur 2 gezeigt, einen Luftfilter 64, dem ein mittels eines Elektromotors 66 betriebener Luftförderer 68 (Verdichtungsförderer) nachgeschaltet ist. Der Elektromotor 66 ist dabei über Anschlüsse 70 mit elektrischer Energie versorgt, wobei die Schaltung dieser Anschlüsse 70 über die Steuerungsvorrichtung 50 erfolgt, und zwar in einer derartigen Weise, daß der Elektromotor an ist oder aus ist. Mittels des Luftförderers 68 läßt sich ein bestimmter Volumenstrom der Luft vorgeben, welche mit Luftsauerstoff als Oxidator dem Brennstoffzellenblock 16 zugeführt wird.

In einer Zuführungsleitung 72 für Luft zum Brennstoffzellenblock 16 ist ein Drucksensor 74 angeordnet, mittels dem sich der Druck der zugeführten Luft ermitteln läßt. Ferner ist in der Zuführungsleitung 72 ein Volumenstrommeßsensor 76 zur Bestimmung des zugeführten Luft-Volumenstroms zum Brennstoffzellenblock 16 angeordnet. An einer Abführungsleitung 78 für Luft von dem Brennstoffzellenblock 16, welche in korrespondierender Verbindung mit der Zuführungsleitung 72 steht, ist ein Einstellventil 80 angeordnet, welches beispielsweise handbetätigbar ist und mit dem sich der Druck in der Zuführungsleitung 72 und der Abführungsleitung 78 einstellen läßt, so daß Volumenstrom und Druck der Luftzuführung über den Luftförderer 68 (Luftkompressor) und das Einstellventil 80 in direkter Abhängigkeit einstellbar sind und insbesondere fest vorgebbar sind.

Auf einer Wasserstoffzuführungsseite 82 ist als Wasserstoffvorrat 20 ein erster Wasserstoffspeicher 84 und ein zweiter Wasserstoffspeicher 86 angeordnet. Diese sind jeweils über Schnellkupplungen 88, 90 an eine Wasserstorfzuführungsleitung 92 gekoppelt. Diese wiederum ist mit einem Entspannungsventil 94 verbunden, welches insbesondere handbetätigbar ist, so daß Wasserstoff von dem Brennstoffzellensystem abführbar ist. Im normalen Betriebsmodus ist das Entspannungsventil 94 geschlossen.

In der Wasserstoffzuführungsleitung 92 ist ein Druckminderer 96 angeordnet, welcher insbesondere mit einem Sperrventil 98 versehen ist, das beispielsweise handbetätigbar ist. Der Druckminderer weist einen Drucksensor 100 auf, mittels dem der Druck vor Druckminderung ermittelbar und anzeigbar ist.

Der Druckminderer reduziert dabei den Druck des Wasserstoffs in der Zuführungsleitung 92 auf einen fest einstellbaren Wert, d. h. nach dem Druckminderer 96 weist der Wasserstoff in der Wasserstoffzuführungsleitung 92 einen bestimmten, fest eingestellten Druck auf. Dieser Druck läßt sich über einen Drucksensor 102 ermitteln und gegebenenfalls anzeigen, so daß er kontrolliert werden kann.

Dem Drucksensor 102 nachfolgend ist in der Wasserstoffzuführungsleitung 92 ein Sicherheitsventil 104 angeordnet, über welches sich Wasserstoff aus dem Brennstoffzellensystem 10 entfernen läßt, wenn beispielsweise ein Druckanstieg eintritt.

In der Wasserstoffzuführungsleitung 92 ist vor dem Brennstoffzellenblock 16 ein insbesondere elektromagnetisch betätigbares Sperrventil 106 angeordnet. Das Sicherheitsventil 104 und das Sperrventil 106 bilden dabei die Ventilvorrichtung 24. Steueranschlüsse 108 des Sperrventils 106 sind mit der Steuerungsvorrichtung 50 verbunden, so daß darüber die Zuführung von Wasserstoff zu dem Brennstoffzellensystem sperrbar ist bzw. freigebbar ist. Das Sperrventil 106 wird dabei so gesteuert, daß es entweder offen oder geschlossen ist.

Auf einer Abführungsseite 110 für Wasserstoff von dem Brennstoffzellenblock 16 ist in einer Abführungsleitung 112 ein Sperrventil 114 angeordnet, welches elektromagnetisch betätigbar ist, wobei entsprechende Anschlüsse 116 mit der Steuerungsvorrichtung 50 verbunden sind. Zwischen den Anschlüssen 116 und der Steuerungsvorrichtung 50 ist ein asymmetrischer Taktgeber 118 geschaltet, über welchen das Sperrventil 114 unabhängig getaktet steuerbar ist und insbesondere dieses getaktet geöffnet werden kann, um für eine Wasserstoffentspannung von dem Brennstoffzellenblock 16 her zu sorgen.

Dem Sperrventil 114 ist in der Abführungsleitung 112 nachgeschaltet ein Einstellventil 120 angeordnet, welches insbesondere handbetätigbar ist. Mittels dieses Einstellventils 120 läßt sich der Entspannungsdruck einstellen.

Auf das Einstellventil 120 folgt in der Wasserstoffabführungsleitung 112 ein Rekombinationsvorrichtung 122, an welcher Wasserstoff mit Luftsauerstoff katalytisch zu Wasser umgesetzt wird. Beispielsweise ist dazu ein Katalysatorgewebe aus Platin-Rodium vorgesehen.

Die einzige Emission des Brennstoffzellensystems 10 ist damit Wasser in flüssiger Form und/oder in Dampfform.

Die Kühlungsvorrichtung 36 umfaßt einen Lüfter 124, welcher durch einen Motor 126 angetrieben ist. Dieser Motor wiederum wird über Anschlüsse 128 mit Energie versorgt, wobei diese Anschlüsse 128 durch die Steuerungsvorrichtung 50 bezüglich der Bereitstellung von elektrischer Energie steuerbar sind.

Die Temperatur des Brennstoffzellenblocks 16 wird über einen oder mehrere Temperatursensoren 130 ermittelt, und über einen Thermoschalter 132 wird dann der Lüfter 124 gesteuert. Die Steuerung der Steuerungsvorrichtung 50 über die Anschlüsse 128 ist im wesentlichen nur eine Steuerung bezüglich der Energieversorgung zum Einschalten oder Ausschalten des Lüfters 124. Es braucht nicht vorgesehen sein, daß der Lüfter 124 an das Brennstoffzellensystem 10 rückgekoppelt ist, d. h. das Steuersignal zum Betrieb des Lüfters 124 stammt von dem Temperatursensor 130 (Zweipunktregelung).

Insbesondere ist es dabei vorgesehen, daß, wenn eine Übertemperatur an dem Brennstoffzellenblock 16 ermittelt wird, ein Temperaturschalter, beispielsweise ein Bimetallschalter, welcher in Serie zu einem Hauptschalter 134 geschaltet ist, das Brennstoffzellensystem 10 abschaltet, d. h. die Zuführung von Wasserstoff und Luft zu dem Brennstoffzellenblock 16 unterbindet.

Die Temperaturregelung des Brennstoffzellenblocks 16 über den Lüfter 124 ist dann über eine beispielsweise Zweipunktregelung unabhängig von der Steuerung des Betriebs des Brennstoffzellensystems 10.

Von dem Brennstoffzellenblock 16 führt eine Pluspotentialleitung 136 zu einem entsprechenden Plus-Anschluß 138 und eine entsprechende Minuspotentialleitung 140 zu einem Minus-Anschluß 142, wobei diese Anschlüsse den externen Anschluß 12 bilden. In der Pluspotentialleitung 136 ist dabei eine Diode 144 zur Sperrung von Rückströmen und eine Sicherung 146 angeordnet. Über einen Shunt-Widerstand beispielsweise in der Minuspotentialleitung 140 läßt sich mit Hilfe eines Voltmeters 150 und eines Amperemeters 152 die an dem Brennstoffzellenblock 16 anliegende Spannung und der vom Brennstoffzellenblock 16 abgegebene Strom messen.

Die Stromversorgung für das Amperemeter 152 läßt sich von der Steuerungsvorrichtung 50 beispielsweise über die Anschlüsse 128 bereitstellen.

Es ist vorgesehen, daß ein Miniaturverbraucher zwischen der Pluspotentialleitung 136 und der Minuspotentialleitung 140 angeordnet ist, um bei Stillstand des Brennstoffzellenblocks 16 eine Umpolung der Brennstoffzellen 18 zu verhindern.

Über den Leistungsschalter 40 läßt sich die Pluspotentialleitung 136 auf den Plusanschluß 138 schalten, bzw. diese Verbindung läßt sich wegschalten. Der Leistungsschalter 40 wiederum ist mit der Steuerungsvorrichtung 50 verbunden. Parallel zu dem Leistungsschalter 40 ist ein Kondensator 154, beispielsweise ein Elektrolytkondensator, geschaltet. Dieser Kondensator dient dazu, während des Schaltvorgangs des Leistungsschalters 40, bei dem eine Umstellung der Energieversorgung der Verbraucher des Brennstoffzellensystems 10 von dem Akkumulator 44 auf den Brennstoffzellenblock 16 selber erfolgt, dessen Energieversorgung sicherzustellen, d. h. der Kondensator 154 stellt einen Energiezwischenspeicher für den Leistungsschalter 40 dar.

Der Leistungsschalter 40 weist damit eine erste Schaltstellung 156 auf, bei der die Verbindung zwischen der Pluspotentialleitung 136 und dem Plusanschluß 138 unterbrochen ist und weist eine zweite Schaltstellung 158 auf, bei welcher diese Verbindung hergestellt ist.

In der ersten Schaltstellung 156 ist der Plusanschluß 138 über eine Sicherung 160 mit einem entsprechenden Plusanschluß des Akkumulators 44 verbunden, wobei der Akkumulator mehrere Akkumulatorblöcke umfassen kann.

Der Hauptschalter 134 ist dabei so angeordnet und ausgebildet, daß bei geöffnetem Hauptschalter (Nichtbetrieb des Brennstoffzellensystems 10) auch in der ersten Schaltstellung 156 des Leistungsschalters 40 die Verbindung zwischen dem Plusanschluß 138 und dem Akkumulator 44 unterbrochen ist.

Ein Minusanschluß 162 des Akkumulators 44 ist über eine Verbindungsleitung 164 mit dem Minusanschluß 142 verbunden.

Es können auch Ladebuchsen 166, 168 vorgesehen sein, welche mit einem Plusanschluß 170 bzw. einem Minusanschluß 162 des Akkumulators 44 verbunden sind, so daß dieser von außen aufgeladen werden kann.

Weiterhin ist eine Akkumulatorladevorrichtung 172 vorgesehen, welche mit dem Plusanschluß 170 und dem Minusanschluß 162 des Akkumulators ständig verbunden ist. Über diese Akkumulatorvorrichtung 172 läßt sich der Akkumulator 44 als Hilfsenergiequelle während des "normalen Betriebs" des Brennstoffzellensystems 10 aufladen, d. h. wenn das Brennstoffzellensystem 10 elektrische Energie abgibt. Insbesondere ist die Akkumulatorladevorrichtung 172 so eingestellt, daß der Akkumulator nur dann geladen wird, wenn die Spannung des Verbrauchers 14 unterhalb eines bestimmten Werts liegt, so daß die Akkumulatorladung den Betrieb des Verbrauchers 14 nicht einschränkt.

Ein Plusanschluß 174 der Steuerungsvorrichtung 50 ist mit dem Plusanschluß 138 verbunden. Ferner ist ein Minusanschluß 176 der Steuerungsvorrichtung 50 mit dem Minusanschluß 142 verbunden. Dadurch ist sichergestellt, daß die Steuerungsvorrichtung 50 unabhängig von der Schalterstellung 156 bzw. 158 des Leistungsschalters 40 mit elektrischer Energie versorgt wird, so daß unabhängig davon, ob die Energie von dem Akkumulator 44 stammt oder von dem Brennstoffzellenblock 16, über die Steuerungsvorrichtung 50 der Elektromotor 66, der Motor 126 und das Sperrventil 106 über die Steuerungsvorrichtung 50 versorgbar sind.

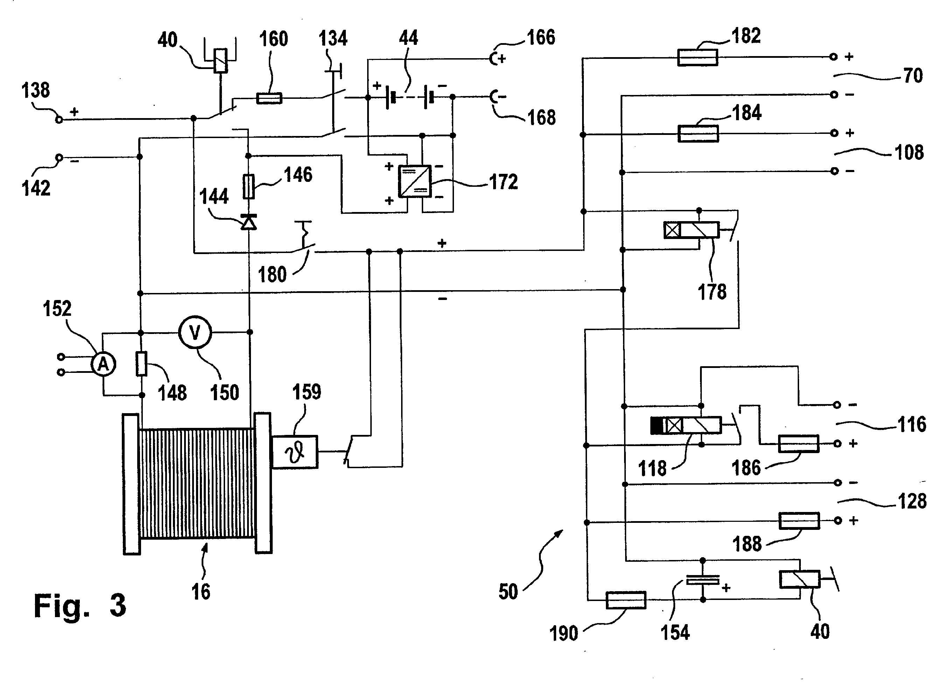

Wie in Figur 3 näher gezeigt ist, umfaßt die Steuerungsvorrichtung 50 eine Zeitsteuerungsvorrichtung 178, welche insbesondere durch ein Zeitrelais mit Einschaltverzögerung gebildet ist. Dadurch läßt sich eine Anzugverzögerung beispielsweise in der Größenordnung von 10 bis 15 Sekunden erreichen, wenn nach Einleitung der Inbetriebnahme des Brennstoffzellensystems 10 von der Energieversorgung mittels des Akkumulators 44 eine Umschaltung auf eine Energieversorgung mittels des Brennstoffzellenblocks 16 erfolgen soll, wobei diese Umschaltung, ausgelöst von der Zeitsteuerungsvorrichtung 178, durch den Leistungsschalter 40 bewirkt wird.

Diese Zeitsteuerungsvorrichtung 178 wirkt dabei auf die Anschlüsse 116, über welche das getaktete Sperrventil 114 steuerbar ist, auf die Anschlüsse 128, mittels welcher die Kühlung des Brennstoffzellenblocks 16 steuerbar ist (ein/aus) und auf den Leistungsschalter 40. Dies bedeutet, daß die Anzugverzögerung auf diese Komponenten wirkt, während sie nicht auf die Luftzuführung (Motor 66) und die Wasserstoffzuführung (Absperrventil 106) wirkt. Mit Einleitung der Inbetriebnahme wird also sofort die Wasserstoffzuführung und die Luftzuführung zum Brennstoffzellenblock 16 freigegeben, während das Anschalten der Kühlungsvorrichtung 36, die getaktete Freigabe des Sperrventils 114 und die Umschaltung des Leistungsschalters 40 von der ersten Schaltstellung 156 auf die zweite Schaltstellung 158 mit dieser Anzugverzögerung erfolgt. Diese ist fest eingestellt und insbesondere dadurch bestimmt, welche Zeit benötigt wird, um bei der Luftzuführung den fest vorgegebenen Volumenstrom und den fest vorgegebenen Druck zu erreichen.

Über einen Schalter 180 läßt sich die Verbindung zwischen dem Plus-Anschluß 138 und der Steuerungsvorrichtung 50 unterbrechen. Dieser Schalter 180 ist insbesondere an den Hauptschalter 134 gekoppelt, so daß die Energieversorgung der Steuerungsvorrichtung 50 durch den Hauptschalter 134 ein- und ausschaltbar ist.

In Figur 3 ist ebenfalls ein Thermoschalter 159, beispielsweise ein Bimetallschalter, gezeigt, welcher bei Überschreiten einer bestimmten Temperatur die Versorgung mit elektrischer Energie der Steuerungsvorrichtung 50 derart unterbricht, daß die Luftzuführung, die Wasserstoffzuführung zu dem Brennstoffzellenblock 16 und die Energieversorgung der Steuerungsvorrichtung 50 gesperrt wird.

Weiterhin ist die Steuerungsvorrichtung 50 noch mit einer Mehrzahl von Sicherungen versehen; insbesondere ist für die Anschlüsse 70 eine Sicherung 182, für die Anschlüsse 108 eine Sicherung 184, für die Anschlüsse 116 eine Sicherung 186, für die Anschlüsse 128 eine Sicherung 188 und für den Leistungsschalter 40 eine Sicherung 190 vorgesehen.

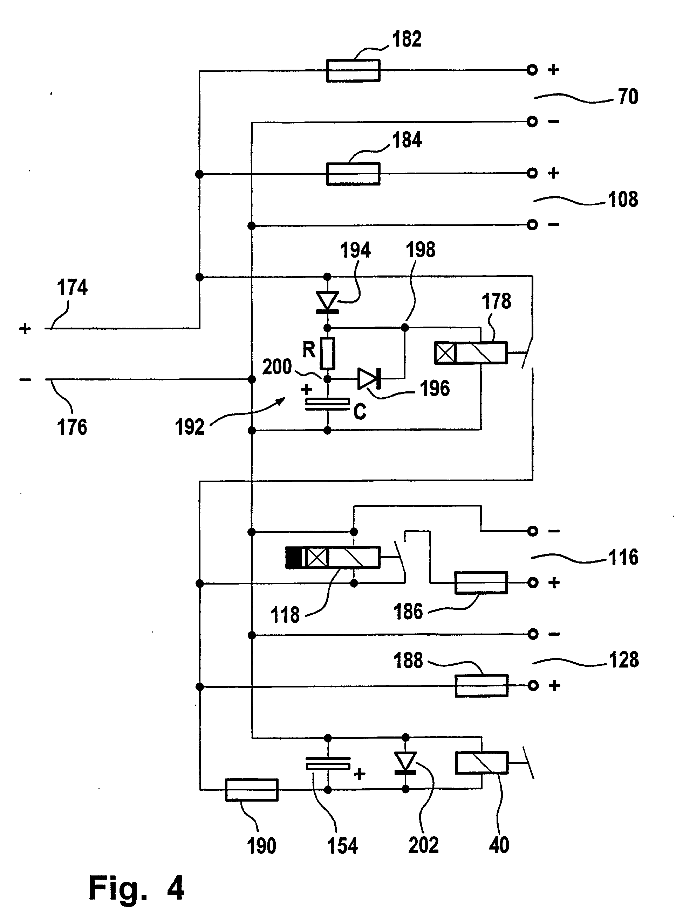

Bei einer Variante einer Ausführungsform, welche in Figur 4 gezeigt ist, ist die Schaltung der Zeitsteuerungsvorrichtung 178 modifiziert. Ansonsten gleiche Komponenten werden mit den gleichen Bezugszeichen wie in Figur 3 versehen.

Der Zeitsteuerungsvorrichtung 178, beispielsweise einem Zeitrelais, ist ein RC-Glied 192 mit einem Widerstand R und einem Kondensator C vorgeschaltet. Der Widerstand R und der Kondensator C liegen dabei in Reihe. Der Widerstand R ist über eine Diode 194, beispielsweise einer Blockdiode, mit dem Plusanschluß 174 verbunden. Weiterhin ist eine Diode 196, beispielsweise eine Blockdiode, so angeordnet, daß sie zwischen einen relaisseitigen Potentialpunkt 198 der Diode 194 und einen Wirkpunkt 200 zwischen dem Widerstand R und dem Kondensator C geschaltet ist.

Diese Beschaltung hat sich in der Praxis als vorteilhaft erwiesen, da für die Energieversorgung der Zeitsteuerungsvorrichtung 178 (des Zeitrelais) auch dann auf stabile Weise gesorgt ist, wenn der asymmetrische Taktgeber 118 und der Leistungsschalter 40 zugeschaltet wird, selbst wenn sich die Anzugszeiten der entsprechenden Relais 178, 118 und 40 geringfügig unterscheiden und der Einschaltstrom dieser Relais für ein kurzzeitiges Absinken der Versorgungsspannung unterhalb der Haltespannung der jeweiligen Relaisspulen sorgt.

Ferner hat es sich noch vorteilhaft erwiesen, dem Kondensator 154 eine Diode 202 parallelzuschalten, um Rückströme und dergleichen von dem Leistungsschalter 40 abzufangen.

### Das erfindungsgemäße Brennstoffzellensystem 10 funktioniert wie folgt:

Es ist zu unterscheiden zwischen der Inbetriebnahme/Außerbetriebnahme des Brennstoffzellensystems 10 und dem "normalen Betrieb", d. h. dem Energieabgabebetrieb, bei dem der Brennstoffzellenblock 16 elektrische Energie an den Verbraucher 14 (und an interne Verbraucher) abgibt.

### Die Inbetriebnahme erfolgt wie folgt:

Durch Betätigung des Hauptschalters 134 wird über die Steuerungsvorrichtung 50 und den Anschluß 70 der Motor 66 für den Luftförderer 68 angeschaltet, so daß dem Brennstoffzellenblock 16 Luft zugeführt wird. Dabei wurde vorher, wie untenstehend noch näher beschrieben, ein bestimmter Volumenstrom als Arbeitspunkt eingestellt und ebenso ein bestimmter Druck der Luftzuführung. Die Erreichung dieses Arbeitspunkts weist dabei eine Verzögerung auf, da der Anlauf des Luftförderers 68 (Luftkompressor) eine Verzögerung aufweist. Diese Verzögerung liegt beispielsweise in der Größenordnung von 5 bis 10 Sekunden.

Ferner wird mit Betätigung des Hauptschalters 134, d. h. mit Einleitung der Inbetriebnahme des Brennstoffzellensystems 10, über die Anschlüsse 108 das Sperrventil 106 geöffnet, so daß dem Brennstoffzellenblock 16 ebenfalls Wasserstoff als Brennstoff bereitgestellt wird. Der Druck der Wasserstoffzuführung ist dabei mittels des Druckminderers 96 voreingestellt und insbesondere fest eingestellt. Die Verzögerung des Erreichens dieses Arbeitspunkts der Wasserstoffzuführung zum Brennstoffzellenblock 16 ist dabei gegenüber der entsprechenden Verzögerung bei der Luftzuführung vernachlässigbar.

Während der anfänglichen Freigabe der Brennstoffzuführung und Oxidatorzuführung zum Brennstoffzellenblock 16 sind die Anschlüsse 116, 128 und der Leistungsschalter 40 noch nicht freigeschaltet; der Leistungsschalter 40 befindet sich dann in seiner ersten Schaltstellung 156 und die elektrische Energie für die Zuführung von Wasserstoff und Luft zu dem Brennstoffzellenblock 16 stammt von dem Akkumulator 44.

Der Akkumulator 44 versorgt in dieser Schalterstellung den Verbraucher 14 mit elektrischer Energie. Es kann alternativ auch ein interner Schalter vorgesehen sein, der den Akkumulator in diesem Zustand von dem Verbraucher 14 abkoppelt.

Mit einer bestimmten, voreingestellten Zeitverzögerung, welche sich nach der Einstellzeit für die Arbeitspunktparameter der Luftzuführung richtet und beispielsweise bei 15 bis 20 Sekunden liegen kann, schaltet die Zeitsteuerungsvorrichtung 178 dann den Leistungsschalter 40, so daß er von seiner ersten Schaltstellung 156 auf seine zweite Schaltstellung 158 übergeht.

Weiterhin werden dann die Anschlüsse 116 und 128 beschaltet, d. h. die Taktung des Absperrventils 106 wird in Gang gesetzt, so daß überschüssiger Wasserstoff zur Wasserbildung aus dem Brennstoffzellenblock 16 abführbar ist und weiterhin die Kühlungsvorrichtung 36 für den Brennstoffzellenblock 16 in Gang gesetzt wird, indem der Motor 126 mit Energie versorgt werden kann. In diesem Stadium (zweite Stufe des Inbetriebnahmevorgangs) liefert dann der Brennstoffzellenblock 16 aufgrund der Umschaltung des Leistungsschalters 40 in die zweite Schaltstellung 158 die notwendige Energie für die Wasserstoffzuführung, Luftzuführung und für die Betätigung der Kühlung.

Während des "normalen Betriebs" (Energieabgabebetrieb) des Brennstoffzellenblocks 16 wird der Akkumulator 44 über die Akkumulatorladevorrichtung 172 aufgeladen, so daß er beim nächsten Inbetriebnahmevorgang wieder bereitsteht.

Der Akkumulator 44 liefert also die Hilfsenergie zur Inbetriebnahme des Brennstoffzellensystems 10, d. h. zum Starten desselben und zum Übergang in den Energieabgabebetrieb.

Da zum einen in der Wasserstoffzuführung und Luftzuführung ein Arbeitspunkt vorgegeben ist, d. h. während des Inbetriebnahmevorgangs voreingestellte Werte erreicht werden und zum anderen die Zeitverzögerung für die Umschaltung des Leistungsschalters 40 vorgegeben ist, läßt sich die Inbetriebnahme bis zum Energieabgabebetrieb automatisch durchführen, d. h. es erfolgt eine "Ein-Knopf-Inbetriebnahme" durch Betätigung des extern betätigbaren Hauptschalters 134, ohne daß ein Benutzer nachfolgend von außen eingreifen muß.

Auf die gleiche Weise wird die Außerbetriebnahme des Brennstoffzellensystems 10 eingeleitet, nämlich daß der Hauptschalter 134 in die Aus-Stellung gebracht wird. Dadurch wird die Stromversorgung der Luftzuführung, die Wasserstoffzuführung über das Sperrventil 106 gesperrt und der Leistungsschalter 40 in die Stellung 156 gebracht, d. h. der Brennstoffzellenblock 16 gibt keine Energie mehr ab und wird automatisch zurückgefahren. In diesem Falle der Außerbetriebnahme ist keine Zeitverzögerung durch die Zeitsteuerungsvorrichtung 178 notwendig, da der "Arbeitspunkt" für den Nichtbetrieb sofort durch Stopp der Brennstoffzuführung und Oxidatorzuführung erreicht ist.

Der "normale Betrieb", d. h. der Leistungsbetrieb oder Energieabgabebetrieb des erfindungsgemäßen Brennstoffzellensystems 10 funktioniert wie folgt:

Auf der Zuführungsseite zu dem Brennstoffzellenblock 16 sind bestimmte Arbeitspunkte der Luftzuführung und Wasserstoffzuführung eingestellt. Diese Arbeitspunkt können variabel in dem Sinne sein, daß sie für ein bestimmtes System vorab eingestellt werden, um das System zu optimieren. Sie werden aber im Betrieb nicht verändert, d. h. sie behalten ihre Festeinstellung.

Fest eingestellt wird als Zuführungsparameter der Volumenstrom der Luft, in welchem diese dem Brennstoffzellenblock 16 zugeführt wird. Die Einstellung erfolgt dabei über die Einstellung der Leistung des Luftförderers 68. Ferner wird über das Einstellventil 80 der Druck der Luftzuführung zu dem Brennstoffzellenblock 16 fest eingestellt. Insbesondere erfolgt keine Luftmengenregelung beispielsweise über die Verwendung von Regelventilen und unter dem Einsatz elektronischer Regeleinrichtungen. Der Druck zum Durchtreiben der Luft durch den Brennstoffzellenblock 16 wird insbesondere in der Größenordnung von 1,2 bis 1,5 bar eingestellt. Es wird weiterhin dafür gesorgt, daß Luft im Überschuß vorliegt, d. h. daß beispielsweise die doppelte Menge an Luft bereitgestellt wird, die maximal für die katalytische Verbrennung benötigt wird. Es kann auch mit Drücken von bis zu 3 bar gefahren werden.

Der Druck der Wasserstoffzuführung wird um 0,1 bar bis 0,3 bar geringer eingestellt, um einerseits einer Austrocknung der Membrane der Brennstoffzellen 18 zu verhindern und um zum anderen eine Wasserdampfabführung aus den Membranen zu vermeiden.

Der Wasserstoffdurchfluß durch die Wasserstoffzuführungsleitung 92 wird dabei dynamisch über die Energieaufnahme des Verbrauchers 14 eingestellt, ohne daß dieser von dem Brennstoffzellensystem selber geregelt werden muß. Um eine geringe Überschußmenge an Wasserstoff abzuführen, wird das Sperrventil 116, gesteuert über den asymmetrischen Taktgeber 118, periodisch geöffnet, beispielsweise alle 30 bis 60 Sekunden in Zeitintervallen von ca. 0,5 Sekunden. Versuche haben ergeben, daß die Überschußmenge an Wasserstoff im Bereich von weniger als 2 % der durch die katalytische Verbrennung im Brennstoffzellenblock 16 verbrauchten Wasserstoffmenge liegt.

Durch die feste Arbeitspunkteinstellung auf der Zuführungsseite und insbesondere der Vorgabe der Druckdifferenz zwischen Luft und Wasserstoff läßt sich erreichen, daß die Membrane der Brennstoffzellen 18 nicht austrocknen, so daß keine Befeuchtereinrichtung vorgesehen werden muß.

Die Abführung von thermischer Verlustleistung aus dem Brennstoffzellenblock 16 erfolgt mittels der Kühlungsvorrichtung 36, wobei der Brennstoffzellenblock 16 mit Kühlrippen versehen ist. Insbesondere ist es vorgesehen, daß für die Kühlungsvorrichtung nur zwei fest eingestellte Schalttemperaturen vorgesehen sind, nämlich "hohe Temperatur" bedeutet ein Einschalten des Lüfters 124 und "Temperatur niedrig" bedeutet ein entsprechendes Abschalten. Diese Temperaturen lassen sich mit dem Temperatursensor 130 ermitteln.

Für ein erfindungsgemäßes Brennstoffzellensystem 10, welches eine Leistung von 150 W abgeben kann, wurde ein elektrischer Eigenverbrauch gemessen, der nur 19,5 W beträgt; dieser niedrige Wert wurde dadurch erreicht, daß auf elektronische Regeleinrichtungen erfindungsgemäße verzichtet werden kann und daß der Betriebsdruck für die Brennstoffzuführung und Luftzuführung niedrig gehalten werden kann. Es konnte auch ein Brennstoffzellensystem realisiert werden, welches eine Leistung bis zu 500 W abgeben kann.

Die elektrische Ausgangsleistung des Brennstoffzellensystems 10 ist allein von der Auswahl des Brennstoffzellenblocks 16 abhängig. Eine grundlegende Neukonzeption bei Änderung der Zielleistungsabgabe ist nicht notwendig.

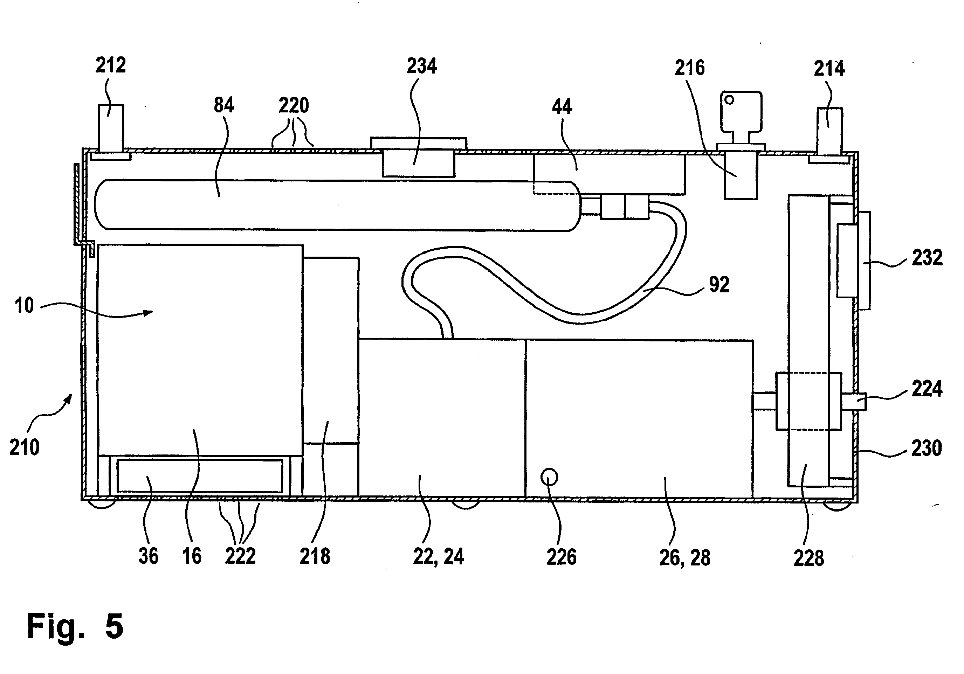

Das erfindungsgemäße Brennstoffzellensystem 10 läßt sich auf einfache Weise in einen kompakten geschlossenen Behälter 210 integrieren (Figur 5). Dieser Behälter weist einen Plusanschluß 212 auf, welcher mit dem Plusanschluß 138 verbunden ist. Ferner ist ein Minusanschluß 214 vorgesehen, welcher mit dem Minusanschluß 142 verbunden ist. Der Hauptschalter 134 ist beispielsweise durch einen Schlüsselschalter 216 gebildet, um die Inbetriebnahme des Brennstoffzellensystems 10 einzuleiten bzw. die Außerbetriebnahme zu bewirken.

Innerhalb des Behälters 210 sind die Wasserstoffspeicher 84 und 86 angeordnet, und ebenso die weitere Wasserstoffzuführung mit Druckminderer 22 und Ventilvorrichtung 24 zu dem Brennstoffzellenblock 16, vermittelt über entsprechende Anschlüsse 218.

Beispielsweise auf einer Oberseite des Behälters 210 sind Lüftungsschlitze 220 angeordnet, über die Wasserstoff aus dem Behälter 210 entweichen kann, wenn das Sicherheitsventil 104 diesen freigibt.

Auf einer Unterseite des Behälters 210 sind unterhalb des Brennstoffzellenblocks 16 Lüftungsschlitze 222 angeordnet, durch welche der zwischen den Lüftungsschlitzen und dem Brennstoffzellenblock 16 angeordneten Kühlungsvorrichtung 36 Umgebungsluft zuführbar ist.

Der Behälter 210 weist eine oder mehrere Luftansaugeöffnungen 224 auf, um Luft anzusaugen und über die Luftversorgungsvorrichtung 26 Luft dem Brennstoffzellenblock 16 zuzuführen.

Ferner ist an dem Behälter 210 eine Luftauslaßöffnung 226 angeordnet, welche dem Einstellventil 80 nachgeordnet ist.

Auf einer Platine 228, welche innerhalb des Behälters 210, d. h. in einem Innenraum seines Gehäuses 230, angeordnet ist, ist die elektronische Schaltung zur Steuerung der Inbetriebnahme und des Betriebs des Brennstoffzellensystems aufgenommen. Insbesondere trägt die Platine 228 die Steuerungsvorrichtung 50.

An einer Seitenwand sind entsprechende Anzeigeinstrumente 232 zur Überwachung des Betriebs des Brennstoffzellensystems 10 angeordnet, insbesondere läßt sich der vom Voltmeter 150, vom Amperemeter 152 jeweils ermittelte Wert, der vom Drucksensor 102 ermittelte Druck, der vom Drucksensor 74 ermittelte Druck und der vom Volumenstrommeßsensor 76 ermittelte Volumenstrom anzeigen.

Weiterhin ist der Akkumulator 44 in dem Gehäuse 230 angeordnet. Es kann auch noch eine Steckdose 234 vorgesehen sein, welche mit den Anschlußbuchsen 166 und 168 verbunden ist.

Der Behälter 210 mit dem darin angeordneten Brennstoffzellensystem 10 stellt eine tragbare Energieversorgungseinheit dar, aus welcher höchstens Luft und Wasserdampf als bei der Erzeugung von elektrischer Energie anfallende Emissionen austreten. Beispielsweise läßt es sich mit dem Brennstoffzellensystem 10, welches in dem Behälter 210 angeordnet ist, realisieren, bei einer Masse von 12 kg eine voll nutzbare Leistung von mindestens 1000 Wh zu erreichen. Im Vergleich dazu weist ein Akkumulator mit einer Leistung von 800 Wh, wovon nur 300 Wh nutzbar sind, eine Masse von 30 bis 35 kg auf.

## Patentansprüche

1. Verfahren zur Erzeugung von elektrischer Energie mittels eines Brennstoffzellensystems, bei welchem einem oder mehreren Brennstoffzellenblöcken ein Brennstoff und ein Oxidator zugeführt werden und in einem Brennstoffzellenblock eine Umwandlung von chemischer Energie in elektrische Energie erfolgt, wobei als Brennstoff Wasserstoff und als Oxidator Luftsauerstoff eingesetzt wird,
**dadurch gekennzeichnet, dass** Zuführungsparameter von Brennstoff und Oxidator fest vorgegeben werden, wobei auf der Zuführungsseite der Druck des einem Brennstoffzellenblock zugeführten Wasserstoffs vorgegeben wird und der Druck und der Volumenstrom der einem Brennstoffzellenblock zugeführten Luft fest vorgegeben wird, dass eine kontinuierliche Wasserstoffabführung aus einem Brennstoffzellenblock gesperrt wird, dass eine Wasserstoffabführung über ein getaktetes Ventil erfolgt und ein asymmetrischer Taktgeber zur Taktung des Ventils vorgesehen ist und dass eine Mengenregelung des einem Brennstoffzellenblock zugeführten Wasserstoffs durch die Leistungsaufnahme des Verbrauchers erfolgt.

2. Verfahren nach Anspruch 1, **dadurch gekennzeichnet, dass** ein Brennstoffzellenblock Polymermembran-Brennstoffzellen umfasst.

3. Verfahren nach einem der vorangehenden Ansprüche, **dadurch gekennzeichnet, dass** eine feste Druckdifferenz zwischen Wasserstoffzuführung und Luftzuführung eingestellt wird.

4. Verfahren nach Anspruch 3, **dadurch gekennzeichnet, dass** die Druckdifferenz im Bereich zwischen 0,1 und 0,3 bar liegt mit dem höheren Druck bei der Luftzuführung.

5. Verfahren nach einem der vorangehenden Ansprüche, **dadurch gekennzeichnet, dass** Luft einem Brennstoffzellenblock im Überschuss bereitgestellt wird.

6. Verfahren nach einem der vorangehenden Ansprüche, **dadurch gekennzeichnet, dass** der Druck der Luftzuführung im Bereich zwischen 1,2 bar und 1,5 bar eingestellt wird.

7. Verfahren nach einem der vorangehenden Ansprüche, **dadurch gekennzeichnet, dass** der Wasserstoff einem Brennstoffzellenblock von einem Vorrat über einen Druckminderer zugeführt wird.

8. Verfahren nach Anspruch 7, **dadurch gekennzeichnet, dass** der Ausgangsdruck des Druckminderers fest eingestellt wird.

9. Verfahren nach einem der vorangehenden Ansprüche, **dadurch gekennzeichnet, dass** die Vorgaben zur Einstellung eines Arbeitspunkts einstellbar sind.

10. Verfahren nach einem der vorangehenden Ansprüche, **dadurch gekennzeichnet, dass** abgeführter Wasserstoff einem Katalysator zur Bildung von Wasser zugeführt wird.

11. Verfahren nach einem der vorangehenden Ansprüche, **dadurch gekennzeichnet, dass** ein Brennstoffzellenblock mittels Luft gekühlt wird.

12. Verfahren nach einem der vorangehenden Ansprüche, **dadurch gekennzeichnet, dass** ein Miniaturverbraucher an den oder die Brennstoffzellenblöcke gekoppelt ist, um bei Stillstand eine Umpolung der Brennstoffzellen zu verhindern.

13. Brennstoffzellensystem, welches einen oder mehrere Brennstoffzellenblöcke (16) umfasst, in denen chemische Energie in elektrische Energie umwandelbar ist, welche an einen Verbraucher (14) abgebbar ist, wobei als Brennstoff Wasserstoff und als Oxidator Luftsauerstoff eingesetzt sind, **dadurch gekennzeichnet, dass** eine Einstellvorrichtung (22, 26, 30) vorgesehen ist, mittels welcher Zuführungsparameter von Brennstoff und Oxidator zu einem Brennstoffzellenblock (16) fest vorgebbar sind, und mittels welcher Druck und Volumenstrom des einem Brennstoffzellenblock (16) zugeführten Oxidators fest einstellbar sind, dass die Einstellvorrichtung einen Druckminderer (22) für den Brennstoff umfasst, welcher einem Brennstoffvorrat (20) nachgeschaltet ist, dass mittels des Druckminderers (96) ein Druck des einem Brennstoffzellenblock (16) zugeführten Brennstoffs fest einstellbar ist, dass in einer Abführungsleitung für Brennstoff von einem Brennstoffzellenblock (16) ein Sperrventil (114) angeordnet ist und dass ein asymmetrischer Taktgeber (118) zur Ansteuerung des Sperrventils (114) vorgesehen ist, wobei das Sperrventil (114) getaktet schaltbar ist.

14. Brennstoffzellensystem nach Anspruch 13, **dadurch gekennzeichnet, dass** die Einstellvorrichtung einen Verdichterförderer (26) für den Oxidator umfasst.

15. Brennstoffzellensystem nach Anspruch 13 oder 14, **dadurch gekennzeichnet, dass** eine Kühlungsvorrichtung (36) für den oder die Brennstoffzellenblöcke (16) vorgesehen ist, welche einen Lüfter (124) umfasst.

16. Brennstoffzellensystem nach Anspruch 15, **dadurch gekennzeichnet, dass** ein Temperatursensor (130) an einem Brennstoffzellenblock (16) angeordnet ist.

17. Brennstoffzellensystem nach Anspruch 16, **dadurch gekennzeichnet, dass** eine vom Temperatursensor (130) ermittelte Temperatur eine Steuergröße für den Lüfter (126) ist.

18. Brennstoffzellensystem nach einem der Ansprüche 13 bis 17, **dadurch gekennzeichnet, dass** eine Hilfsenergiequelle (44) vorgesehen ist, welche die Hilfsenergie zur Inbetriebnahme des Brennstoffzellensystems bereitstellt und dass ein Schalter (40) vorgesehen ist, mittels welchem das Brennstoffzellensystem von Energieaufnahme von der Hilfsquelle in einen Energieabgabebetrieb eines Brennstoffzellenblocks (16) umschaltbar ist.

19. Brennstoffzellensystem nach einem der Ansprüche 13 bis 18, **dadurch gekennzeichnet, dass** Energieverbraucher (68, 36, 50) des Brennstoffzellensystems von diesem selber mit Energie versorgbar sind.

20. Brennstoffzellensystem nach Anspruch 19, **dadurch gekennzeichnet, dass** ein Luftverdichter (68) des Brennstoffzellensystems von diesem mit Energie versorgbar ist.

21. Brennstoffzellensystem nach Anspruch 19 oder 20, **dadurch gekennzeichnet, dass** eine Kühlungsvorrichtung (36) eines Brennstoffzellenblocks (16) von dem Brennstoffzellensystem mit Energie versorgbar ist.

22. Brennstoffzellensystem nach einem der Ansprüche 13 bis 21, **dadurch gekennzeichnet, dass** ein Brennstoffzellenblock (16) Polymermembran-Brennstoffzellen (18) umfasst.

23. Brennstoffzellensystem nach einem der Ansprüche 13 bis 22, **dadurch gekennzeichnet, dass** die Hilfsenergiequelle einen oder mehrere Akkumulatoren (44) umfasst.

24. Brennstoffzellensystem nach Anspruch 23, **dadurch gekennzeichnet, dass** eine Akkumulatorladevorrichtung (172) vorgesehen ist, mittels der sich der oder die Akkumulatoren (44) während des Energieabgabebetriebs aufladen lassen.

25. Brennstoffzellensystem nach einem der Ansprüche 18 bis 24, **dadurch gekennzeichnet, dass** die Hilfsenergiequelle (44) extern mit Energie versorgbar ist.

26. Brennstoffzellensystem nach einem der Ansprüche 13 bis 25, **dadurch gekennzeichnet, dass** eine Inbetriebnahme/Außerbetriebnahme des Brennstoffzellensystems automatisch durchführbar ist.

27. Brennstoffzellensystem nach Anspruch 26, **dadurch gekennzeichnet, dass** ein extern betätigbarer Schalter (134) zur Einleitung der Inbetriebnahme/Außerbetriebnahme des Brennstoffzellensystems vorgesehen ist.

28. Brennstoffzellensystem nach Anspruch 26 oder 27, **dadurch gekennzeichnet, dass** die Inbetriebnahmeparameter/Außerbetriebnahmeparameter des Brennstoffzellensystems fest eingestellt sind.

29. Brennstoffzellensystem nach Anspruch 28, **dadurch gekennzeichnet, dass** die Vorgaben einstellbar sind.

30. Brennstoffzellensystem nach einem der Ansprüche 13 bis 29, **gekennzeichnet durch** eine Anordnung in einem kompakten Behälter (210), welcher mit elektrischen Anschlüssen (212, 214) für einen externen Verbraucher versehen ist.

31. Brennstoffzellensystem nach Anspruch 30, **dadurch gekennzeichnet, dass** ein Brennstoffvorrat (20) in dem Behälter (210) angeordnet ist.

## Claims

1. Method for generating electrical energy by way of a fuel cell system, in which method one or more fuel cell blocks are supplied with a fuel and an oxidator and chemical energy is converted to electrical energy in a fuel cell block, wherein hydrogen is used as the fuel and atmospheric oxygen is used as the oxidator,
**characterized in that** supply parameters of fuel and oxidator are predetermined in a fixed manner, wherein on the supply side the pressure of the hydrogen supplied to a fuel cell block and the pressure and the volume flow of the air supplied to a fuel cell block are predetermined in a fixed manner, **in that** continuous hydrogen exhaustion from a fuel cell block is stopped, **in that** hydrogen exhaustion is carried out via a clocked valve and an asymmetric clock generator for clocking the valve is provided and **in that** flow control of the hydrogen supplied to a fuel cell block is carried out through the power consumption of the consumer.

2. Method in accordance with claim 1, **characterized in that** a fuel cell block comprises polymer membrane fuel cells.

3. Method in accordance with any one of the preceding claims, **characterized in that** a fixed pressure difference between hydrogen supply and air supply is adjusted.

4. Method in accordance with claim 3, **characterized in that** the pressure difference is in the range between 0.1 and 0.3 bar with the higher pressure for the air supply.

5. Method in accordance with any one of the preceding claims, **characterized in that** a fuel cell block is provided with an excess of air.

6. Method in accordance with any one of the preceding claims, **characterized in that** the pressure of air supply is adjusted in the range between 1.2 bar and 1.5 bar.

7. Method in accordance with any one of the preceding claims, **characterized in that** a fuel cell block is supplied with hydrogen from a supply via a pressure reducer.

8. Method in accordance with claim 7, **characterized in that** the outlet pressure of the pressure reducer is adjusted in a fixed manner.

9. Method in accordance with any one of the preceding claims, **characterized in that** the settings for adjusting an operating point are adjustable.

10. Method in accordance with any one of the preceding claims, **characterized in that** exhausted hydrogen is supplied to a catalyst to form water.

11. Method in accordance with any one of the preceding claims, **characterized in that** a fuel cell block is cooled by air.

12. Method in accordance with any one of the preceding claims, **characterized in that** a miniature consumer is coupled to the one or more fuel cell blocks in order to prevent polarity reversal of the fuel cells during a shutdown period.

13. Fuel cell system, comprising one or more fuel cell blocks (16) in which chemical energy is convertible to electrical energy that is suppliable to a consumer (14), wherein hydrogen is used as the fuel and atmospheric oxygen is used as the oxidator, **characterized in that** an adjustment device (22, 26, 30) is provided by which supply parameters of fuel and oxidator to a fuel cell block (16) are predeterminable in a fixed manner and by which pressure and volume flow of the oxidator supplied to a fuel cell block (16) are adjustable in a fixed manner, **in that** the adjustment device comprises a pressure reducer (22) for the fuel downstream of a fuel supply (20), **in that** by way of the pressure reducer (96) a pressure of the fuel supplied to a fuel cell block (16) is adjustable in a fixed manner, **in that** a stop valve (114) is arranged in an exhaust conduit for fuel from a fuel cell block (16) and **in that** an asymmetric clock generator (118) is provided for controlling the stop valve (114), wherein the stop valve (114) is switchable in a clocked manner.

14. Fuel cell system in accordance with claim 13, **characterized in that** the adjustment device comprises a compressing conveying means (26) for the oxidator.

15. Fuel cell system in accordance with claim 13 or 14, **characterized in that** a cooling device (36) is provided for the one or more fuel cell blocks (16), said cooling device (36) comprising a fan (124).

16. Fuel cell system in accordance with claim 15, **characterized in that** a temperature sensor (130) is arranged at a fuel cell block (16).

17. Fuel cell system in accordance with claim 16, **characterized in that** a temperature detected by the temperature sensor (130) is a control quantity for the fan (126).

18. Fuel cell system in accordance with any one of claims 13 to 17, **characterized in that** an auxiliary energy source (44) is provided which provides the auxiliary energy for startup of the fuel cell system and **in that** a switch (40) is provided by way of which the fuel cell system is switchable from energy consumption from the auxiliary source to an energy supply mode of operation of a fuel cell block (16).

19. Fuel cell system in accordance with any one of claims 13 to 18, **characterized in that** energy consumers (68, 36, 50) of the fuel cell system are capable of having their energy supplied by the fuel cell system itself.

20. Fuel cell system in accordance with claim 19, **characterized in that** an air compressor (68) of the fuel cell system is capable of having its energy supplied by the fuel cell system.

21. Fuel cell system in accordance with claim 19 or 20, **characterized in that** a cooling device (36) of a fuel cell block (16) is capable of having its energy supplied by the fuel cell system.

22. Fuel cell system in accordance with any one of claims 13 to 21, **characterized in that** a fuel cell block (16) comprises polymer membrane fuel cells (18).

23. Fuel cell system in accordance with any one of claims 13 to 22, **characterized in that** the auxiliary energy source comprises one or more rechargeable batteries (44).

24. Fuel cell system in accordance with claim 23, **characterized in that** a rechargeable battery charging device (172) is provided which allows the one or more rechargeable batteries (44) to be charged during the energy supply mode of operation.

25. Fuel cell system in accordance with any one of claims 18 to 24, **characterized in that** the auxiliary energy source (44) is capable of having its energy supplied from outside.

26. Fuel cell system in accordance with any one of claims 13 to 25, **characterized in that** startup/shutdown operation of the fuel cell system is capable of being performed automatically.

27. Fuel cell system in accordance with claim 26, **characterized in that** an externally actuatable switch (134) is provided for initiating the startup/shutdown operation of the fuel cell system.

28. Fuel cell system in accordance with claim 26 or 27, **characterized in that** the startup/shutdown parameters of the fuel cell system are adjusted in a fixed manner.

29. Fuel cell system in accordance with claim 28, **characterized in that** the settings are adjustable.

30. Fuel cell system in accordance with any one of claims 13 to 29, **characterized by** being arranged in a compact container (210) that is provided with electrical connections (212, 214) for an external consumer.

31. Fuel cell system in accordance with claim 30, **characterized in that** the container (210) has a fuel supply (20) arranged therein.

## Revendications

1. Procédé de production d'énergie électrique au moyen d'un système de piles à combustible, dans lequel un combustible et un oxydant sont acheminés à un ou plusieurs blocs de piles à combustible et dans un bloc de piles à combustible s'effectue une conversion d'énergie chimique en énergie électrique, dans lequel on utilise comme combustible de l'hydrogène et comme oxydant de l'oxygène de l'air,
**caractérisé en ce que** des paramètres d'acheminement de combustible et d'oxydant sont prédéterminés de manière fixe, dans lequel, au niveau de l'acheminement, la pression de l'hydrogène acheminé à un bloc de piles à combustible est prédéterminée et la pression et le débit volumique de l'air acheminé à un bloc de piles à combustible sont prédéterminés de manière fixe, **en ce qu'**une évacuation continue de l'hydrogène d'un bloc de piles à combustible est bloquée, **en ce qu'**une évacuation d'hydrogène s'effectue par une vanne synchronisée et une horloge asymétrique pour la synchronisation de la vanne est prévue, et **en ce qu'**une régulation de quantité de l'hydrogène acheminée à un bloc de piles à combustible s'effectue par la consommation d'énergie du récepteur.

2. Procédé selon la revendication 1, **caractérisé en ce qu'**un bloc de piles à combustible comprend des piles à combustible à membrane de polymère.

3. Procédé selon l'une des revendications précédentes, **caractérisé en ce qu'**une différence de pression fixe est réglée entre l'acheminement d'hydrogène et l'acheminement d'air.

4. Procédé selon la revendication 3, **caractérisé en ce que** la différence de pression se situe dans la plage entre 0,1 et 0,3 bar, la pression supérieure étant dans l'acheminement d'air.

5. Procédé selon l'une des revendications précédentes, **caractérisé en ce que** de l'air est fourni en excédent à un bloc de piles à combustible.

6. Procédé selon l'une des revendications précédentes, **caractérisé en ce que** la pression de l'acheminement d'air est réglée dans une plage entre 1,2 bar et 1,5 bar.

7. Procédé selon l'une des revendications précédentes, **caractérisé en ce que** l'hydrogène est acheminé à un bloc de piles à combustibles depuis une réserve par un réducteur de pression.

8. Procédé selon la revendication 7, **caractérisé en ce que** la pression de sortie du réducteur de pression est réglée de manière fixe.

9. Procédé selon l'une des revendications précédentes, **caractérisé en ce que** les instructions de réglage d'un point de fonctionnement peuvent être réglées.

10. Procédé selon l'une des revendications précédentes, **caractérisé en ce que** de l'hydrogène évacué est acheminé à un catalyseur pour former de l'eau.

11. Procédé selon l'une des revendications précédentes, **caractérisé en ce qu'**un bloc de piles à combustible est refroidi avec de l'air.

12. Procédé selon l'une des revendications précédentes, **caractérisé en ce qu'**un récepteur miniature est couplé au ou aux blocs de piles à combustible pour empêcher, lors de l'arrêt, une inversion de polarité des piles à combustible.

13. Système de piles à combustible qui comprend un ou plusieurs blocs de piles à combustible (16) dans lesquels de l'énergie chimique peut être convertie en énergie électrique, qui peut être restituée à un récepteur (14), dans lequel on utilise comme combustible de l'hydrogène et comme oxydant de l'oxygène de l'air, **caractérisé en ce qu'**un dispositif de réglage (22, 26, 30) est prévu, au moyen duquel des paramètres d'acheminement de combustible et d'oxydant à un bloc de piles à combustible (16) peuvent être prédéterminés de manière fixe, et au moyen duquel la pression et le débit volumique de l'oxydant acheminé à un bloc de piles à combustible (16) peuvent être prédéterminés de manière fixe, **en ce que** le dispositif de réglage comprend un réducteur de pression (22) pour le combustible qui est monté en aval d'une réserve de combustible (20), **en ce qu'**au moyen du réducteur de pression (96), une pression du combustible acheminé à un bloc de piles à combustible (16) peut être réglée de manière fixe, **en ce que**, dans une conduite d'évacuation de combustible d'un bloc de piles à combustible (16), une vanne unidirectionnelle (114) est disposée et **en ce qu'**une horloge asymétrique (118) est prévue pour la commande de la vanne unidirectionnelle (114), dans lequel la vanne unidirectionnelle (114) peut être actionnée de façon synchronisée.

14. Système de piles à combustible selon la revendication 13, **caractérisé en ce que** le dispositif de réglage comprend un convoyeur à compresseur (26) pour l'oxydant.

15. Système de piles à combustible selon la revendication 13 ou 14, **caractérisé en ce qu'**un dispositif de refroidissement (36) pour le ou les blocs de piles à combustible est prévu, qui comprend un ventilateur.

16. Système de piles à combustible selon la revendication 15, **caractérisé en ce qu'**un capteur de température (130) est disposé sur un bloc de piles à combustible (16).

17. Système de piles à combustible selon la revendication 16, **caractérisé en ce qu'**une température déterminée par le capteur de température (130) est une variable de référence pour le ventilateur (126).

18. Système de piles à combustible selon l'une des revendications 13 à 17, **caractérisé en ce qu'**une source d'énergie d'appoint (44) est prévue, qui fournit l'énergie d'appoint pour la mise en service du système de piles à combustible et **en ce qu'**un interrupteur (40) est prévu, au moyen duquel le système de piles à combustible peut être commuté d'une absorption d'énergie de la source d'appoint à une fonction de restitution d'énergie d'un bloc de piles à combustible (16).

19. Système de piles à combustible selon l'une des revendications 13 à 18, **caractérisé en ce que** des récepteurs d'énergie (68, 36, 50) du système de piles à combustible peuvent être alimentés en énergie par celui-ci.

20. Système de piles à combustible selon la revendication 19, **caractérisé en ce qu'**un compresseur d'air (68) du système de piles à combustible peut être alimenté en énergie par celui-ci.

21. Système de piles à combustible selon la revendication 19 ou 20, **caractérisé en ce qu'**un dispositif de refroidissement (36) d'un bloc de piles à combustible (16) peut être alimenté en énergie par le système de piles à combustible.

22. Système de piles à combustible selon l'une des revendications 13 à 21, **caractérisé en ce qu'**un bloc de piles à combustible (16) comprend des piles à combustible à membrane de polymère (18).

23. Système de piles à combustible selon l'une des revendications 13 à 22, **caractérisé en ce que** la source d'énergie d'appoint comprend un ou plusieurs accumulateurs (44).

24. Système de piles à combustible selon la revendication 23, **caractérisé en ce qu'**un dispositif de chargement d'accumulateur (172) est prévu, au moyen duquel on peut charger le ou les accumulateurs (44) pendant la fonction de restitution d'énergie.

25. Système de piles à combustible selon l'une des revendications 18 à 24, **caractérisé en ce que** la source d'énergie d'appoint (44) peut être alimentée en énergie au niveau externe.

26. Système de piles à combustible selon l'une des revendications 13 à 25, **caractérisé en ce qu'**une mise en service/ une mise hors service du système de piles à combustible peut être réalisée automatiquement.

27. Système de piles à combustible selon la revendication 26, **caractérisé en ce qu'**un interrupteur (134) pouvant être actionné au niveau externe est prévu pour initier la mise en service/ la mise hors service du système de piles à combustible.

28. Système de piles à combustible selon la revendication 26 ou 27, **caractérisé en ce que** les paramètres de mise en service/ paramètres de mise hors service du système de piles à combustible sont réglés de façon fixe.

29. Système de piles à combustible selon la revendication 28, **caractérisé en ce que** les instructions sont réglables.

30. Système de piles à combustible selon l'une des revendications 13 à 29, **caractérisé par** une disposition dans un contenant compact (210) qui est doté de raccords électriques (212, 214) pour un récepteur externe.

31. Système de piles à combustible selon la revendication 30, **caractérisé en ce qu'**une réserve de combustible (20) est disposée dans le contenant.
